# EUROPÄISCHE PATENTSCHRIFT

(11) **EP 3 195 389 B1**
(45) Veröffentlichungstag und Bekanntmachung des Hinweises auf die Patenterteilung: **12.12.2018**
(21) Anmeldenummer: 15775111.6
(22) Anmeldetag: 15.09.2015
(51) Int. Cl.: H01M 10/6556, H01M 6/50, H01M 10/653, H01M 10/617, H01M 10/651

(54) **WÄRMEÜBERTRAGER ZUM TEMPERIEREN VON ENERGIESPEICHERELEMENTEN EINES ENERGIESPEICHERS**
HEAT EXCHANGER FOR CONTROLLING THE TEMPERATURE OF ENERGY STORAGE ELEMENTS OF AN ENERGY STORE
ÉCHANGEUR DE CHALEUR POUR ÉQUILIBRER LA TEMPÉRATURE D'ÉLÉMENTS D'UN ACCUMULATEUR D'ÉNERGIE

(30) Priorität: 19.09.2014 DE 102014218923
(43) Veröffentlichungstag der Anmeldung: 26.07.2017
(73) Patentinhaber: Mahle International GmbH, 70376 Stuttgart (DE)
(72) Erfinder: HEEG, Oliver, 71701 Schwieberdingen (DE); PAVLOV, Oleksandr, 71083 Herrenberg (DE)
(74) Vertreter: BRP Renaud & Partner mbB Rechtsanwälte Patentanwälte Steuerberater
(86) Internationale Anmeldenummer: PCT/EP2015/071007
(87) Internationale Veröffentlichungsnummer: WO 2016/041918

(56) Entgegenhaltungen:
- EP-A2- 1 394 890
- DE-A1-102009 014 954
- US-A1- 2003 131 973

## Beschreibung

Die Erfindung betrifft einen Wärmeübertrager zum Temperieren von Energiespeicherelementen und/oder einer Leistungselektronik beispielsweise eines Energiespeichers, mit einer Wärmeübertragungsfläche, welche an den Energiespeicher angelegt wird. Ferner betrifft die Erfindung einen Energiespeicher mit mindestens einem solchen Wärmeübertrager sowie die Herstellung eines solchen Wärmeübertragers.

In modernen Hybrid- und Elektroautos werden Energiespeicher, beispielsweise Lithium-Ionen-Batterien eingesetzt. Um eine optimale Leistung und lange Lebenszeit der Energiespeicher zu gewährleisten, ist ein leistungsfähiges Thermomanagement notwendig, welches es ermöglicht, Energiespeicherelemente, beispielsweise Batteriezellen, des Energiespeichers in einem bestimmten Temperaturfenster zu betreiben. Bei Belastung müssen die Energiespeicherelemente aktiv und homogen gekühlt und in der kalten Jahreszeit entsprechend geheizt werden. Dafür ist der zuverlässige Kontakt zwischen den Energiespeicherelementen und einem Wärmeübertrager notwendig. Außerdem sollte der auf dem Wärmeübertrager entstehende Temperaturgradient ausgeglichen und nicht auf die Batterie übertragen werden. Insbesondere bei niedrigen Volumenströmen in einem Kühlmittelkreislauf des Energiespeichers treten verhältnismäßig hohe Temperaturgradienten auf dem Wärmeübertrager auf. Dadurch werden die Energiespeicherelemente unterschiedlich stark gekühlt, was zu einer Temperaturdifferenz zwischen den Energiespeicherelementen führt. Eine solche Temperaturdifferenz ist ungünstig, da sie sich negativ auf die Lebensdauer und Leistungsfähigkeit der Batterie auswirkt.

Ebenso kann eine inhomogene Verspannung des Wärmeübertragers mit dem Energiespeicher eine inhomogene Temperatur in dem Energiespeicher verursachen.

Aus der DE 10 2011 084 002 A1 ist ein Wärmeübertrager mit einer thermischen Übergangsvorrichtung bekannt, welche aus mehreren Schichten aufgebaut ist. Eine thermische Isolationsschicht ist mit variierender Dicke auf dem Wärmeübertrager aufgetragen. Darüber ist eine Toleranzausgleichsschicht aus einem kompressiblen Material aufgebracht, welche die unterschiedlichen Schichtdicken der thermischen Isolationsschicht sowie Unebenheiten des Zellmoduls ausgleicht. Dadurch wird eine ortsabhängig variierende Wärmeleitfähigkeit zwischen dem Wärmeübertrager und den zu kühlenden Energiespeicherelementen erzielt. Nachteilig an dieser Lösung ist, dass zwei Schichten auf dem Wärmeübertrager aufgetragen werden müssen, was den Herstellungsaufwand erhöht.

Aus der DE 10 2009 014 954 A1 offenbart eine Kühlplatte oder einen Wärmetauscher mit einer Wärmeübertragungsfläche welche an einem Energiespeicher angelegt wird. Um eine Temperaturdifferenz an der Batterieoberfläche zu verringern wird die Wärmeübertragungsfläche mit einer Wärmeleitfolie beschichtet. Durch eine geeignete Lochung der Wärmeleitfolie wird die Wärmeübertragung angepasst.

Der vorliegenden Erfindung liegt die Aufgabe zugrunde, eine Möglichkeit bereitzustellen, eine Temperaturdifferenz zwischen Energiespeicherelementen eines Energiespeichers kostengünstig zu reduzieren.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, eine wärmeleitende Schicht partiell auf die Wärmeübertragungsfläche des Wärmeübertragers aufzubringen, so dass ein Kontakt zwischen dem Wärmeübertrager und den Energiespeicherelementen des Energiespeichers über die wärmeleitende Schicht stattfindet. Durch den lediglich partiellen Auftrag des wärmeleitenden Materials auf der Wärmeübertragungsfläche bilden sich Isolierbereiche, in denen ein Luftspalt zwischen der Wärmeübertragungsfläche und den Energiespeicherelementen vorliegt. Durch Variation des Verhältnisses zwischen beschichteten und unbeschichteten Bereichen kann der Wärmewiderstand zwischen dem Wärmeübertrager und den Energiespeicherelementen eingestellt werden. Dabei ist es zweckmäßig, dass die Wärmeübertragungsfläche partiell mit einer ein wärmeleitendes Material aufweisende Schicht beschichtet ist, und dass die Wärmeübertragungsfläche Kontaktbereiche aufweist, die mit der wärmeleitenden Schicht versehen sind und Isolierbereiche aufweist, die nicht mit der wärmeleitenden Schicht versehen sind. Durch das Ausbilden der Kontaktbereiche und Isolierbereiche kann der Wärmewiderstand zwischen dem Wärmeübertrager und den Energiespeicherelementen lokal angepasst werden, so dass trotz eines Temperaturgradienten in dem Wärmeübertrager die Energiespeicherelemente nur geringe Temperaturunterschiede zueinander aufweisen. Dadurch, dass Luft als Isolierung für die Isolierbereiche genutzt wird, ist das Auftragen lediglich einer die Wärmeübertragung beeinflussenden Schicht notwendig, so dass die Herstellung eines solchen Wärmeübertragers einfach und kostengünstig ist. Falls eine elektrische Isolation zwischen dem Wärmeübertrager und dem Energiespeicher erforderlich ist, kann auf der Wärmeübertragungsfläche eine deckende elektrisch isolierende Schicht aufgebracht sein, auf welche dann die wärmeleitende Schicht partiell aufgebracht ist.

Vorteilhaft ist es, wenn die Kontaktbereiche für einen definierten thermischen Kontakt zwischen dem Wärmeübertrager und den Energiespeicherelementen vorgesehen sind. Dadurch kann die Wärmeübertragung zwischen dem Wärmeübertrager und den Energiespeicherelementen über die Kontaktbereiche erfolgen, wenn der Wärmeübertrager an den Energiespeicher angelegt ist. Auf diese Weise kann der Wärmewiderstand zwischen dem Wärmeübertrager und dem Energiespeicher gezielt eingestellt werden.

Besonders vorteilhaft ist es, dass die Kontaktbereiche flächig sowie rund, insbesondere kreisförmig und/oder oval, und/oder eckig, insbesondere viereckig und/oder sechseckig ausgebildet sind. Auf diese Weise können die Kontaktbereiche gleichmäßig verteilt auf der Wärmeübertragungsoberfläche aufgebracht werden. Darüber hinaus kann durch Variation der Größe der jeweiligen Kontaktbereiche ein Verhältnis zwischen den Isolierbereichen und den Kontaktbereichen beeinflusst werden.

Besonders vorteilhaft ist es, dass ein Bedeckungsgrad, der das Verhältnis zwischen einer Fläche der Kontaktbereiche und einer Fläche der Isolierbereiche angibt, abschnittsweise variiert. Die Wärmeübertragung zwischen dem Wärmeübertrager und den Energiespeicherelementen erfolgt sowohl über die Kontaktbereiche als auch über die Isolierbereiche in Form einer Parallelschaltung. Während die Wärmeübertragung über die Kontaktbereiche sehr gut ist, ist die Wärmeübertragung in den Isolierbereichen über den Luftspalt deutlich geringer. Der Bedeckungsgrad bestimmt also den Wärmewiderstand zwischen dem Wärmeübertrager und den Energiespeicherelementen. Durch die Variation des Bedeckungsgrades wird demnach auch der Wärmewiderstand zwischen dem Wärmeübertrager und den Energiespeicherelementen variiert. Auf diese Weise können Temperaturvariationen des Wärmeübertragers ausgeglichen werden, so dass die Temperaturunterschiede zwischen den Energiespeicherelementen gering sind. Insbesondere variiert der Bedeckungsgrad in einer Längsrichtung der Wärmeübertragers also in einer Hauptströmungsrichtung eines Fluids, das durch den Wärmeübertrager strömt. Dadurch erfolgt die Variation des Bedeckungsgrads in Richtung eines Temperaturgradienten des Wärmeübertragers, der sich während des Betriebs einstellt.

Eine günstige Variante sieht vor, dass der Bedeckungsgrad der Wärmeübertragungsfläche in einer Längsrichtung des Wärmeübertragers und in einer Querrichtung des Wärmeübertragers variiert. Dadurch kann eine Temperaturinhomogenität in den Energiespeicherelementen auch in einer Richtung quer zu der Strömungsrichtung verhindert werden.

In günstiger Weise ist der Bedeckungsgrad der Wärmeübertragungsfläche lokal an eine gewünschte Temperaturdifferenz zwischen dem Wärmeübertrager und den Energiespeicherelementen derart angepasst, dass der Bedeckungsgrad kleiner ist je höher eine gewünschte Temperaturdifferenz zwischen dem Wärmeübertrager und den Energiespeicherelementen ist. D.h. in Bereichen, in denen eine kleine Temperaturdifferenz gewünscht ist, ist der Bedeckungsgrad größer als in Bereichen, in denen eine größere Temperaturdifferenz gewünscht ist. Ziel ist es, eine möglichst gleichmäßige Temperaturverteilung innerhalb des Energiespeichers zu erzielen. Um in dem Energiespeicher eine annähernd konstante Temperatur zu erzielen, muss der Wärmefluss aus dem Energiespeicher in den Wärmeübertrager zumindest annähernd konstant sein bzw. dem Abwärmeenergiestrom entsprechen. Aufgrund des Temperaturgradienten, welcher sich in dem Wärmeübertrager einstellt, und ggf. nur unter hohem Aufwand reduzieren lässt, sollte in Bereichen, in denen die treibende Temperaturdifferenz zwischen dem Wärmeübertrager und dem Energiespeicher gering ist ein geringer Wärmewiderstand, also ein hoher Bedeckungsgrad vorhanden sein, während in Bereichen in denen die Temperaturdifferenz größer ist bzw. sein sollte, ein höherer Wärmewiderstand erforderlich ist. Durch die Anpassung des Bedeckungsgrades an die gewünschten Temperaturdifferenzen kann also erreicht werden, dass der Wärmefluss von dem Energiespeicher zu dem Wärmeübertrager oder anders herum über die Fläche des Wärmeübertragers konstant ist, so dass sich nur geringe Temperaturunterschiede zwischen den einzelnen Energiespeicherelementen einstellen.

Erfindungsgemäß ist vorgesehen, dass der Bedeckungsgrad der Wärmeübertragungsfläche variiert, um mindestens ein Hotspot und/oder ein Coldspot des Wärmeübertragers und/oder der Energiespeicherelemente zu kompensieren. Wenn beispielsweise die Temperatur eines Hotspots größer ist als die des Energiespeichers, kann der Bedeckungsgrad sehr klein gewählt sein. Also im Wesentlichen nur Isolierbereiche auf dem betreffenden Bereich der Wärmeübertragungsfläche des Wärmeübertragers angeordnet sein, so dass nicht noch zusätzliche Wärme in die zu kühlenden Energiespeicherelemente eingebracht wird. Ist im Bereich der Hotspots die Temperatur des Wärmeübertragers jedoch noch geringer als die gewünschte Temperatur der Energiespeicherelemente, kann der Bedeckungsgrad auch sehr hoch gewählt werden, um trotz des Hotspots eine ausreichende Kühlung der Energiespeicherelemente zu erzielen. Entsprechend können auch Hotspots oder Coldspots in dem Energiespeicher durch eine Anpassung des Bedeckungsgrades ausgeglichen werden.

Eine bevorzugte Lösung sieht vor, dass der Wärmeübertrager einen Fluidkanal aufweist, durch welchen ein Fluid geleitet werden kann, um die Energiespeicherelemente zu temperieren, und dass an einer Einströmseite des Wärmeübertragers, an welcher das Fluid in den Wärmeübertrager einströmt, der Bedeckungsgrad kleiner ist als an einer Ausströmseite des Wärmeübertragers, an welcher das Fluid aus dem Wärmeübertragers ausströmt. An der Einströmseite des Wärmeübertragers kommt das Fluid frisch temperiert an und hat dadurch einen größeren Temperaturunterschied zu den Energiespeicherelementen als an der Ausströmseite des Wärmeübertragers. Aus diesem Grund ist an der Einströmseite des Wärmeübertragers ein geringerer Bedeckungsgrad notwendig als an der Ausströmseite des Wärmeübertragers. An der Ausströmseite des Wärmeübertragers hat sich in der Regel die Temperatur des Fluids und damit die Temperatur des Wärmeübertragers an die Temperatur des Energiespeichers angenähert, so dass dort die Temperaturdifferenz zwischen dem Wärmeübertrager und den Energiespeicherelementen geringer ist. Der variable Bedeckungsgrad wirkt sich also sowohl beim Kühlen als auch Beheizen der Energiespeicherelemente positiv aus.

Ferner wird die oben genannte Aufgabe durch einen Energiespeicher mit Energiespeicherelementen und mindestens einem Wärmeübertrager gemäß der vorstehenden Beschreibung, der an den Energiespeicherelementen anliegt, um die Energiespeicherelemente zu temperieren gelöst, wobei eine Kontaktfläche zwischen den Energiespeicherelementen und dem Wärmeübertrager durch die auf dem Wärmeübertrager aufgebrachte wärmeleitende Schicht gebildet ist. Somit übertragen sich die Vorteile des Wärmeübertragers auf den Energiespeicher, auf deren vorstehende Beschreibung insoweit Bezug genommen wird.

Eine vorteilhafte Variante sieht vor, dass der Bedeckungsgrad der Wärmeübertragungsfläche variiert, um inhomogene Anpressdrücke zwischen dem Wärmeübertrager und den Energiespeicherelementen zu kompensieren. Falls die Schichtdicke der Wärmeleitschicht aufgrund einer inhomogenen Verspannung lokal unterschiedlich ist, wird dadurch auch der thermische Anbindungswiderstand verändert. Dies kann bei der Auslegung des Bedeckungsgrades berücksichtigt werden, um derartige Veränderungen auszugleichen.

Eine vorteilhafte Lösung sieht vor, dass die Kontaktbereiche, die mit dem wärmeleitenden Material beschichtet sind, und die Isolierbereiche, die nicht mit dem wärmeleitenden Material beschichtet sind, sich in einer Querrichtung des Wärmeübertragers abwechseln, so dass bei den Isolierbereichen ein Luftspalt zwischen dem Wärmeübertrager und den Energiespeicherelementen gebildet ist. Dadurch, dass sich die Kontaktbereiche und die Isolierbereiche abwechseln, halten die Kontaktbereiche die Energiespeicherelemente auf Abstand zu der Wärmeübertragungsoberfläche des Wärmeübertragers, so dass bei den Isolierbereichen ein Luftspalt zwischen der Wärmeübertragungsoberfläche des Wärmeübertragers und den Energiespeicherelementen gebildet ist.

Vorteilhafterweise erfolgt die Wärmeübertragung zwischen dem Wärmeübertrager und den Energiespeicherelementen parallel über die mit wärmeleitendem Material bedeckten Kontaktbereiche und über die an den Isolierbereichen gebildeten Luftspalte. Dadurch tragen sowohl die Kontaktbereiche als auch die Isolierbereiche zur Wärmeübertragung bei, so dass durch Variation der Verhältnisse der Flächen der Isolierbereiche und Kontaktbereiche der Wärmewiderstand beeinflusst werden kann.

Besonders bevorzugt ist es, dass die Kontaktbereiche Strukturgrößen aufweisen, die kleiner sind als die Strukturgrößen der Energiespeicherelemente. Auf diese Weise kann vermieden werden, dass aufgrund der partiellen Auftragung der wärmeleitenden Schicht Temperaturunterschiede zwischen den Energiespeicherelementen entstehen. Durch die kleinere Strukturgröße der Kontaktbereiche und Isolierbereiche im Vergleich zur Strukturgröße der Energiespeicherelemente erfolgt die Wärmeübertragung zwischen dem Wärmeübertrager und jeweils einem Energiespeicherelement immer über mindestens einen Kontaktbereich und mindestens einen Isolierbereich.

Insbesondere sind die Strukturgrößen der Kontaktbereiche parallel zur Wärmeübertragungsoberfläche gemessen und können beispielsweise die Kantenlänge, der Durchmesser, die Länge Halbachsen oder der Diagonalen oder ähnliche Abmessungen der Kontaktbereiche sein. Die Strukturgröße der Energiespeicherelemente wird dabei in der gleichen Richtung betrachtet, also parallel zur Wärmeübertragungsoberfläche und ist beispielsweise durch einen Zelldurchmesser der Energiespeicherelemente gegeben.

Eine günstige Lösung sieht vor, dass ein mittlerer Wärmewiderstand zwischen dem Wärmeübertrager und den Energiespeicherelementen abschnittsweise variiert. Auf diese Weise kann ein sich einstellender Temperaturunterschied zwischen dem Wärmeübertrager und den Energiespeicherelementen gezielt beeinflusst werden, um beispielsweise einen im Wärmeübertrager vorhandenen Temperaturgradienten auszugleichen.

Der mittlere Wärmewiderstand wird dabei zum Beispiel über eine Fläche gemittelt, welche der Strukturgrößer der Energiespeicherelemente entspricht. So kann der mittlere Wärmewiderstand über die Wärmeübertragungsfläche variieren und für ein einzelnes Energiespeicherelement relevant sein.

Der mittlere Wärmewiderstand variiert insbesondere in Strömungsrichtung eines Fluids, das durch den Wärmeübertrager strömt, also in Längsrichtung der Wärmeübertragers. Dadurch variiert der mittlere Wärmewiderstand in Richtung eines Temperaturgradienten des Wärmeübertragers, der sich während des Betriebes einstellt.

Die oben genannte Aufgabe wird ferner durch ein Verfahren zur Herstellung eines Wärmeübertragers gemäß der vorstehenden Beschreibung für einen Energiespeicher gemäß der vorstehenden Beschreibung gelöst, wobei die Kontaktbereiche auf die Wärmeübertragungsfläche des Wärmeübertragers aufgedruckt oder als Folienzuschnitte aufgeklebt werden. Auf diese Weise kann die wärmeleitende Schicht in sehr einfacher und sehr kostengünstiger Weise aufgebracht werden, so dass der Wärmeübertrager äußerst günstig herzustellen ist.

Ferner ist erfindungsgemäß vorgesehen, dass bei einer Bestimmung des Bedeckungsgrades der Wärmeübertragungsfläche Hotspots und/oder Coldspots des Wärmeübertragers und/oder der Energiespeicherelemente berücksichtigt werden. Dadurch kann eine noch gleichmäßigere Temperatur in den Energiespeicherelementen erzielt werden.

Eine besonders vorteilhafte Variante sieht vor, dass bei einer Bestimmung des Bedeckungsgrades der Wärmeübertragungsfläche inhomogene Anpressdrücke zwischen dem Wärmeübertrager und den Energiespeicherelementen berücksichtigt werden. Der Anpressdruck zwischen dem Wärmeübertrager und den Energiespeicherelementen bewirkt eine Kompression der Wärmeleitschicht. Ist der Anpressdruck nicht gleich, ergeben sich unterschiedliche Schichtdicken und damit unterschiedliche Wärmewiderstände. Um einen gleichmäßigen Anpressdruck über die gesamte Fläche zu erzielen, müsste ein großer Aufwand betrieben werden, Daher ist er günstig, die Wirkung der inhomogenen Anpressdrücke durch Variation des Bedeckungsgrades auszugleichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittdarstellung durch einen Energiespeicher mit einem Wärmeübertrager,
- Fig. 2: ein Diagramm, wobei eine Temperatur des Wärmeübertragers und eine Temperatur des Energiespeichers ortsabhängig in Richtung einer Strömungsrichtung eines Fluids in dem Wärmeübertrager dargestellt sind,
- Fig. 3: ein Diagramm, wobei eine Bedeckungsgrad einer Wärmeübertragungsfläche und ein Wärmewiderstand zwischen dem Wärmeübertrager und dem Energiespeicher ortsabhängig in Richtung einer Strömungsrichtung eines Fluids in dem Wärmeübertrager dargestellt sind,
- Fig. 4: eine Draufsicht auf eine Wärmeübertragungsfläche des Wärmeübertragers,
- Fig. 5: eine Draufsicht auf eine zweite Variante des Wärmeübertragers,
- Fig. 6: eine Draufsicht auf die Wärmeübertragungsfläche des Wärmeübertragers aus Figur 4,
- Fig. 7: eine Schnittdarstellung eines Energiespeichers mit zwei Wärmeübertragern,
- Fig. 8: eine Draufsicht auf eine Wärmeübertragungsfläche einer dritten Variante des Wärmeübertragers, und
- Fig. 9: eine Draufsicht auf eine Wärmeübertragungsfläche einer vierten Variante des Wärmeübertragers.

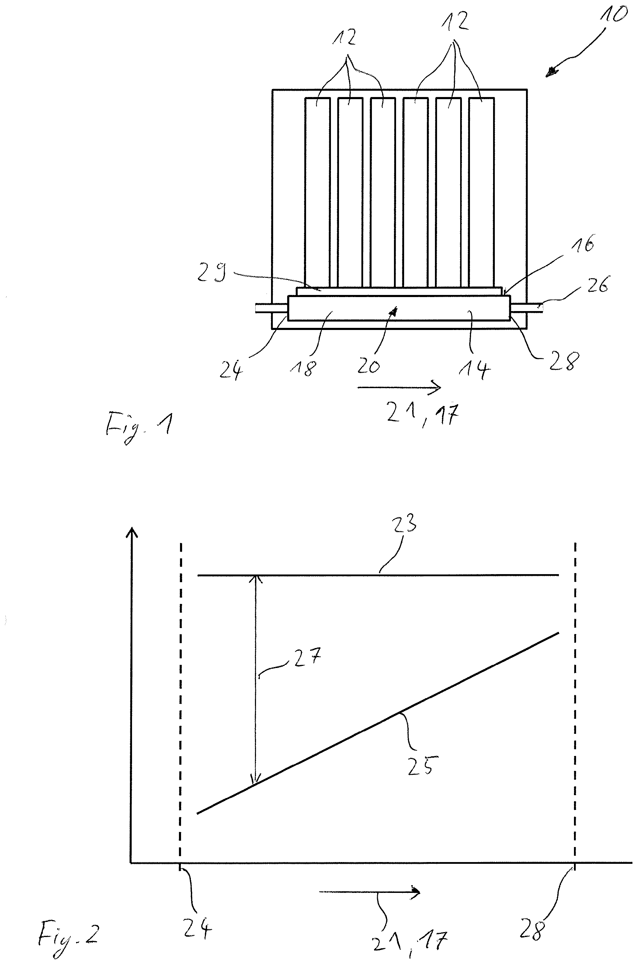

Ein in Figur 1 dargestellter Energiespeicher 10 weist mehrere Energiespeicherelemente 12, und einen Wärmeübertrager 14 auf, der an den Energiespeicherelementen 12 anliegt, um die Energiespeicherelemente 12 zu temperieren. Dazu weist der Wärmeübertrager 14 eine Wärmeübertragungsfläche 16 auf, mit welcher der Wärmeübertrager 14 an den Energiespeicherelementen 12 anliegt und einen Fluidkanal 18, durch welchen ein Fluid 20 durch den Wärmeübertrager 14 geleitet werden kann, um diesem und damit die Energiespeicherelemente 12 zu temperieren.

Es versteht sich, dass der Wärmeübertrager 14 auch verwendet werden kann, um andere Elemente, wie beispielsweise eine Leistungselektronik, zu temperieren. Im Folgenden wird beispielhaft nur die Temperierung von Energiespeicherelementen erläutert.

Der Energiespeicher 10 wird beispielsweise in Kraftfahrzeugen, insbesondere Hybridkraftfahrzeugen oder Elektrofahrzeugen verwendet. Um die dafür notwendige elektrische Energie speichern zu können, weist der Energiespeicher 10 die Energiespeicherelemente 12 auf, welche beispielsweise elektro-chemische Speicherelemente wie Lithium-Ionen-Akkus sind. Generell sind auch Kondensatoren, insbesondere elektro-chemische Doppelschichtkondensatoren denkbar.

Solche Energiespeicher weisen ein begrenztes Temperaturfenster auf, in welchem der Betrieb der Energiespeicherelemente ordnungsgemäß stattfinden kann. Bei geringeren Temperaturen ist aufgrund der geringeren chemischen Reaktionsdynamik die Leistungsfähigkeit der Energiespeicherelemente eingeschränkt. Und zu hohe Temperaturen führen zu einer schnelleren Alterung oder zur direkten Schädigung der Energiespeicherelemente. Aus diesem Grund ist es vorteilhaft, wenn die Temperaturunterschiede zwischen den einzelnen Energiespeicherelementen 12 gering sind, da auf diese Weise die Temperatur aller Energiespeicherelemente 12 einfacher in dem erlaubten Temperaturfester gehalten werden können.

Die Temperierung der Energiespeicherelemente 12 erfolgt durch den Wärmeübertrager 14, welcher durch das Fluid 20 temperiert wird, in dem er von dem Fluid durchströmt wird. Dabei strömt das Fluid 20 durch einen Fluideinlass 22 auf einer Einströmseite 24 des Wärmeübertragers 14 in den Wärmeübertrager 14 ein und durch einen Fluidauslass 26 an einer Ausströmseite 28 des Wärmeübertragers 14 aus dem Wärmeübertrager 14 wieder aus. Je nachdem ob das Fluid 20 den Energiespeicher 10 wärmen oder kühlen soll, ist das Fluid 20 an der Einströmseite 24 des Wärmeübertragers 14 wärmer oder kälter als der Wärmeübertrager 14, jedenfalls weist das Fluid 20 an der Einströmseite 24 des Wärmeübertragers 14 eine höhere Temperaturdifferenz zu dem Wärmeübertrager 14 auf als an der Ausströmseite 28 des Wärmeübertragers 14, da das Fluid beim Durchströmen des Wärmeübertragers Wärmeenergie abgeben oder aufnehmen konnte. Dadurch stellt sich auch im Wärmeübertrager 14 ein Temperaturgradient ein. Die Einströmseite 24 und die Ausströmseite 28 sind in einer Längsrichtung 17 des Wärmeübertragers zueinander beabstandet. Folglich ist eine Strömungsrichtung 21 des Fluids in dem Wärmeübertrager 14 im Wesentlichen parallel zu der Längsrichtung 17. Eine lokale Strömungsrichtung des Fluids kann selbstverständlich davon abweichen, wenn beispielsweise der Fluidkanal 18 meanderförmig verläuft.

Wie beispielsweise in Fig. 2 dargestellt ist beim Kühlen eine Temperatur 23 des Wärmeübertragers 14 an der Einströmseite 24 des Wärmeübertragers 14 kleiner als an einer Ausströmseite 28 des Wärmeübertragers 14. Da eine Temperatur 25 des Energiespeichers 10 möglichst konstant sein soll ist eine Temperaturdifferenz 27 zwischen dem Wärmeübertrager 14 und dem Energiespeicherelementen 12 an der Einströmseite 24 größer als an der Ausströmseite 28. Dadurch kann sich der Temperaturgradient im Wärmeübertrager 14 auf die Energiespeicherelemente 12 übertragen, was ungünstig wäre, wie oben beschrieben. Entsprechend ist beim Heizen mittels des Wärmeübertragers 14 auch die Temperaturdifferenz 27 an der Einströmseite 24 größer als an der Ausströmseite 28.

Um den Temperaturgradienten innerhalb des Wärmeübertragers 14 gering zu halten, könnte die Strömungsgeschwindigkeit des Fluids 20 erhöht werden, so dass eine geringe Temperaturdifferenz 27 zwischen der Einströmseite 24 und der Ausströmseite 28 des Wärmeübertragers 14 erzielt wird. Dies würde allerdings zu einem erhöhten Energieverbrauch für die Kühlung führen. Im Gegensatz dazu könnte der Energieverbrauch für die Kühlung reduziert werden, wenn die Strömungsgeschwindigkeit des Fluids 20 reduziert wird und sich dadurch ein höherer Temperaturunterschied zwischen der Einströmseite 24 und der Ausströmseite 28 einstellt, da durch den höheren Temperaturunterschied je Volumeneinheit des Fluids 20 mehr Wärmeenergie zu dem Wärmeübertrager 14 hin oder von dem Wärmeübertrager weg transportiert werden kann.

Um die Auswirkungen des Temperaturgradienten des Wärmeübertragers 14 zu reduzieren, ist die Wärmeübertragungsfläche 16 partiell mit einer ein wärmeleitendes Material aufweisenden Schicht 29 beschichtet. Dabei sind Kontaktbereiche 30 mit der wärmeleitenden Schicht 29 versehen und Isolierbereiche 32 sind nicht mit der wärmeleitenden Schicht 29 versehen. Wenn nun der Wärmeübertrager 14 an die Energiespeicherelemente 12 angelegt wird, treten nur die mit wärmeleitendem Material beschichteten Kontaktbereiche 30 des Wärmeübertragers 14 mit den Energiespeicherelementen 14 in Kontakt. Durch Variation der Größen der Kontaktbereiche 30 und der Isolierbereiche 32, insbesondere durch Variation eines Bedeckungsgrades 34, der das Verhältnis zwischen den Flächen der Kontaktbereiche 30 und der Isolierbereiche 32 angibt, kann ein Wärmewiderstand 36 zwischen dem Wärmeübertrager 14 und dem Energiespeicher 10 also damit zu den Energiespeicherelementen 12 eingestellt werden.

Durch die Wahl kleiner Strukturgrößen der Kontaktbereiche 30, also bei einer Verwendung von einer Vielzahl von Kontaktbereichen 30, kann abschnittsweise ein mittlerer Wärmewiderstand 36 zwischen dem Wärmeübertrager 14 und dem Energiespeicher 10 eingestellt werden. Vorzugsweise ist die Strukturgröße 30 der Kontaktbereiche 30 so klein, dass die Wärmeübertragung von dem Wärmeübertrager 14 über mehrere Kontaktbereiche 30, beispielsweise drei, zu einem einzelnen Energiespeicherelement 12 erfolgt. Dadurch kann für jedes Energiespeicherelement 12 individuell der Bedeckungsgrad 34 und damit der Wärmewiderstand 36 eingestellt werden, um trotz des Temperaturgradienten in dem Wärmeübertrager 14 die jeweiligen einzelnen Energiespeicherelemente 12 in dem nutzbaren Temperaturfenster zu halten.

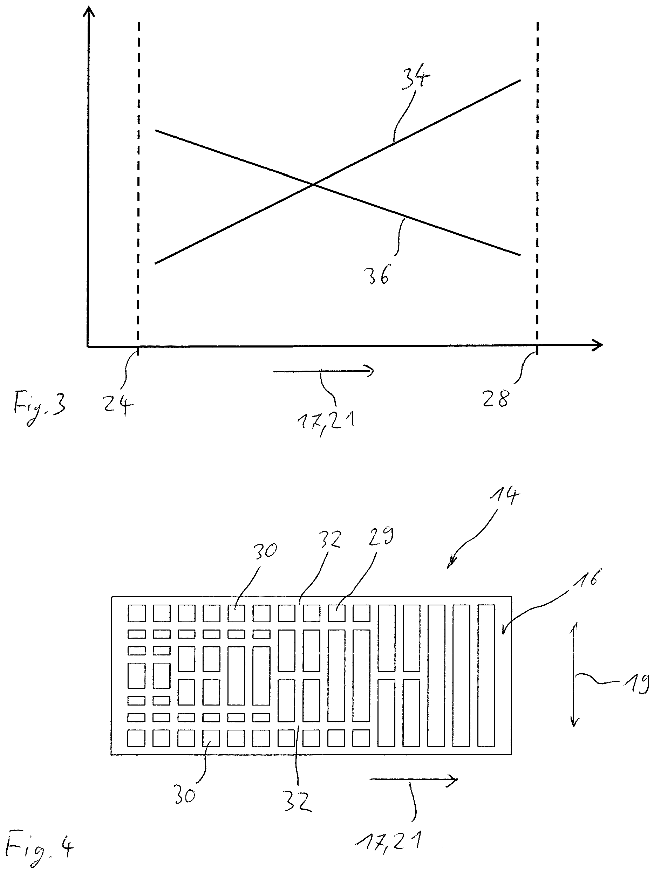

Beispielsweise ist der Bedeckungsgrad 34 im Bereich der Einströmseite 24 kleiner als im Bereich der Ausströmseite 28. Dadurch ist der Wärmewiderstand 36 im Bereich der Einströmseite 24 größer als im Bereich der Ausströmseite 28 (vgl. Fig. 3). Somit kann erreicht werden, dass die Wärmeenergieübertragung von den Energiespeicherelementen 12 zu dem Wärmeübertrager 14 im Bereich der Einströmseite 24 in etwa gleich groß ist wie die Wärmeenergieübertragung der Energiespeicherelemente 12 zu dem Wärmeübertrager 14 im Bereich der Ausströmseite 28. Im Bereich der Einströmseite 24 ist die Temperaturdifferenz 27 zwischen dem Wärmeübertrager 14 und einem dort angeordneten Energiespeicherelement 12 größer als im Bereich der Ausströmseite 28. Folglich ist an der Einströmseite 24 ein höherer Wärmewiderstand 36 nötig als an der Ausströmseite 28, um die gleiche Wärmestromdichte von dem Energiespeicher 10 zu dem Wärmeübertrager 14 zu erzielen.

Die Kontaktbereiche 30 werden durch die partiell aufgebrachte wärmeleitende Schicht gebildet. Entsprechend sind diese flach ausgebildet. Darüber hinaus sind verschiedene Formen denkbar. Insbesondere sind eckige oder runde Formen denkbar. Besonders vorteilhaft sind viereckige oder sechseckige Formen, da sich diese Formen auf einer Fläche gut aneinanderreihen lassen.

Die Kontaktbereiche 30 sind beabstandet zueinander angeordnet und werden durch die Isolierbereiche 32 voneinander getrennt. Die Isolierbereiche 32 sind insbesondere zusammenhängend ausgebildet und werden durch die Kontaktbereiche 30 unterbrochen. Wie beispielsweise in Figur 4 dargestellt, sind die Isolierbereiche 32 vollständig zusammenhängend ausgestaltet. Allerdings ist es je nach Anordnung der Kontaktbereiche 30 auch denkbar, dass mehrere Gruppen von Isolierbereichen 32 voneinander getrennt ausgebildet sind.

Der Bedeckungsgrad 34 der Wärmeübertragungsfläche 16 kann insbesondere durch die Anzahl der Kontaktbereiche 30 beeinflusst werden. Darüber hinaus kann er auch durch die Größe der Kontaktbereiche 30 beeinflusst werden.

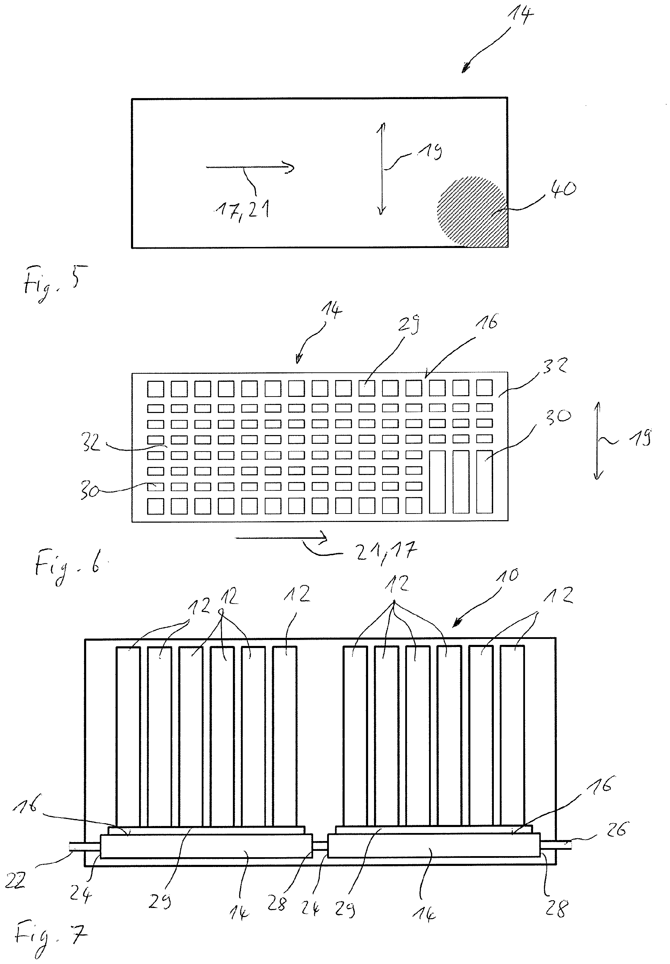

Wie beispielsweise in den Figuren 5 und 6 dargestellt, kann der Bedeckungsgrad 34 auch angepasst werden, um sogenannte Hotspots und/oder Coldspots 40, deren Temperatur sehr lokal und dafür stark von der mittleren Temperatur abweicht, ausgeglichen werden. Insbesondere können Hotspots und/oder Coldspots 40 im Energiespeicher, also auch im Wärmeübertrager 14 ausgeglichen werden. Dazu kann der Bedeckungsgrad 34 der Wärmeübertragungsfläche 16 sowohl in der Längsrichtung 17 als auch in einer quer zu der Längsrichtung 17 verlaufenden Querrichtung 19 variiert werden.

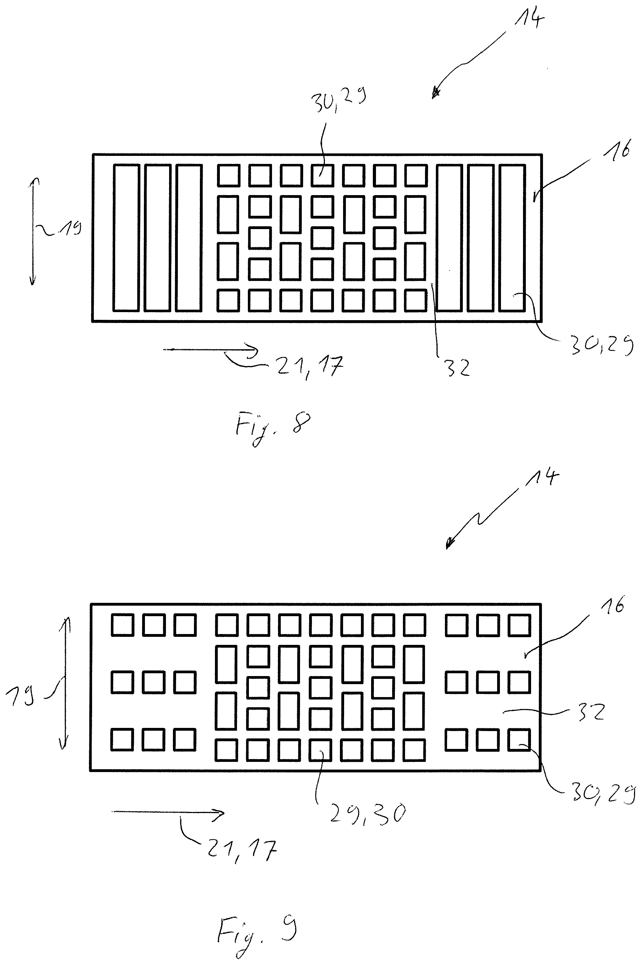

Ferner kann, wie beispielsweise in den Figuren 8 und 9 dargestellt ist, vorgesehen sein, den Effekt ungleichmäßiger Anpressdrücke zwischen den Energiespeicherelemente 12 und der Wärmeübertragungsfläche 16 auf den Wärmewiderstand auszugleichen. Der Anpressdruck bewirkt eine Kompression der wärmeleitenden Sicht 29 bzw. der Kontaktbereiche 30, so dass der Wärmewiderstand aufgrund der reduzierten Dicke sich verringert. Ist nun der Anpressdruck über die gesamte Wärmeübertragungsfläche 16 nicht konstant, führt dies zu Abweichungen des erzielten Wärmewiderstandes und damit zu ungewollten Temperaturabweichungen in den Energiespeicherelementen 12.

Dies kann ebenfalls durch eine Variation des Bedeckungsgrades 34 ausgeglichen werden. Dies kann, wie beispielsweise in Figur 8 dargestellt ist, dadurch erfolgen, dass durch einen höheren Bedeckungsgrad die Stützwirkung der Kontaktbereiche 30 verbessert wird und somit die Kompression verringert wird. Alternativ kann auch vorgesehen sein, wie beispielsweise in der Figur 9 dargestellt ist, in Bereichen mit höherem Anpressdruck den Bedeckungsgrad 34 zu verringern, um den durch die Kompression der wärmeleitenden Schicht 29 gesunkenen Wärmewiderstand auszugleichen.

Es versteht sich, dass durch Variation des Bedeckungsgrades jede beliebige Kombination der vorgenannten Kompensationen mit einem kombinierten Bedeckungsmuster ausgeglichen werden kann. So kann beispielsweise sowohl der Temperaturgradient in dem Wärmeübertrager 14 als auch Hotspots und/oder Coldspots 40 ausgeglichen werden. Zusätzlich ist es auch noch möglich eine Ungleichmäßige Verspannung zwischen den Energiespeicherelementen 12 und dem Wärmeübertrager 14 auszugleichen.

Ferner ist es auch möglich, in einem Energiespeicher 10 mehrere Wärmeübertrager 14 einzusetzen, welche beispielsweise fluidisch in Reihe geschaltet sind. In einer solchen Variante kann der Bedeckungsgrad 34 der beiden Wärmeübertrager 14 individuell angepasst werden, so dass trotz der Temperaturunterschiede zwischen den beiden Wärmeübertragern 14 eine zumindest annähernd konstante Temperatur innerhalb des Energiespeichers 10 erzielt werden kann.

Die Kontaktbereiche 30 können beispielsweise durch ein Druckverfahren, wie beispielsweise Siebdruck oder Schablonendruck, auf die Wärmeübertragungsfläche 16 aufgetragen werden. Des Weiteren können die Kontaktbereiche mittels Folienzuschnitten auf die Wärmeübertragungsfläche 16 aufgebracht werden.

## Patentansprüche

1. Wärmeübertrager zum Temperieren von Energiespeicherelementen (12) und/oder einer Leistungselektronik beispielsweise eines Energiespeichers (10), mit einer Wärmeübertragungsfläche (16), welche an den Energiespeicher (10) angelegt wird,
**dadurch gekennzeichnet,**
- **dass** die Wärmeübertragungsfläche (16) partiell mit einer ein wärmeleitendes Material aufweisende Schicht (29) beschichtet ist, und
- **dass** die Wärmeübertragungsfläche (16) Kontaktbereiche (30) aufweist, die mit der wärmeleitenden Schicht (29) versehen sind, und Isolierbereiche (32) aufweist, die nicht mit der wärmeleitenden Schicht (29) versehen sind, **dadurch gekennzeichnet,**
- **dass** der Bedeckungsgrad (34) der Wärmeübertragungsfläche (16) variiert, um mindestens einen Hotspot und/oder einen Coldspot des Wärmeübertragers (14) und/oder der Energiespeicherelemente (12) zu kompensieren.

2. Wärmeübertrager nach Anspruch 1,
**dadurch gekennzeichnet,**
**dass** die Kontaktbereiche (30) für einen definierten thermischen Kontakt zwischen dem Wärmeübertrager (14) und den Energiespeicherelementen (12) vorgesehen sind.

3. Wärmeübertrager nach einem der Ansprüche 1 bis 2,
**dadurch gekennzeichnet,**
**dass** die Kontaktbereiche (30) flächig sowie rund, insbesondere kreisförmig und/oder oval, und/oder eckig, insbesondere viereckig und/oder sechseckig, ausgebildet sind.

4. Wärmeübertrager nach einem der Ansprüche 1 bis 3,
**dadurch gekennzeichnet,**
**dass** ein Bedeckungsgrad (34), der das Verhältnis zwischen einer Fläche der Kontaktbereiche (30) und einer Fläche der Isolierbereiche (32) angibt, abschnittsweise variiert.

5. Wärmeübertrager nach Anspruch 4,
**dadurch gekennzeichnet,**
**dass** der Bedeckungsgrad (34) der Wärmeübertragungsfläche (16) in einer Längsrichtung (17) des Wärmeübertragers (14) und in einer Querrichtung (19) des Wärmeübertragers (14) variiert.

6. Wärmeübertrager nach Anspruch 4 oder 5,
**dadurch gekennzeichnet,**
**dass** der Bedeckungsgrad (34) der Wärmeübertragungsfläche (16) lokal an eine gewünschte Temperaturdifferenz (27) zwischen dem Wärmeübertrager (14) und den Energiespeicherelementen (12) derart angepasst ist, dass der Bedeckungsgrad (34) kleiner ist je höher eine gewünschte Temperaturdifferenz (27) zwischen dem Wärmeübertrager (14) und den Energiespeicherelementen (12) ist.

7. Wärmeübertrager nach einem der Ansprüche 4 bis 6,
**dadurch gekennzeichnet,**
**dass** der Wärmeübertrager (14) einen Fluidkanal (18) aufweist, durch welchen ein Fluid (20) geleitet werden kann, um die Energiespeicherelemente (12) zu temperieren, und dass an einer Einströmseite (24) des Wärmeübertragers (14), an welcher das Fluid (20) in den Wärmeübertrager (14) einströmt, der Bedeckungsgrad (34) kleiner ist als an einer Ausströmseite (28) des Wärmeübertragers (14), an welcher das Fluid (20) aus dem Wärmeübertrager (14) ausströmt.

8. Energiespeicher mit Energiespeicherelementen (12) und mindestens einem Wärmeübertrager (14) nach einem der Ansprüche 1 bis 7, der an den Energiespeicherelementen (12) anliegt, um die Energiespeicherelemente (12) zu temperieren,
**dadurch gekennzeichnet, dass**
eine Kontaktfläche zwischen den Energiespeicherelementen (12) und dem Wärmeübertrager (14) durch die auf dem Wärmeübertrager (14) aufgebrachte wärmeleitende Schicht (29) gebildet ist.

9. Energiespeicher nach Anspruch 8,
**dadurch gekennzeichnet,**
**dass** der Bedeckungsgrad (34) der Wärmeübertragungsfläche (16) variiert, um inhomogene Anpressdrücke zwischen dem Wärmeübertrager (14) und den Energiespeicherelementen (12) zu kompensieren.

10. Energiespeicher nach Anspruch 8 oder 9,
**dadurch gekennzeichnet,**
**dass** die Kontaktbereiche (30), die mit dem wärmeleitenden Material beschichtet sind, und die Isolierbereiche (32), die nicht mit dem wärmeleitenden Material beschichtet sind, sich quer zu einer Längsrichtung (17) des Wärmeübertragers (14) abwechseln, so dass bei den Isolierbereichen (32) ein Luftspalt zwischen dem Wärmeübertrager (14) und den Energiespeicherelementen (12) gebildet ist.

11. Energiespeicher nach einem der Ansprüche 8 bis 10,
**dadurch gekennzeichnet,**
**dass** die Kontaktbereiche (14) Strukturgrößen aufweisen, die kleiner sind als die Strukturgrößen der Energiespeicherelemente (12).

12. Verfahren zur Herstellung eines Wärmeübertragers (14) gemäß einem der Ansprüche 1 bis 7 für einen Energiespeicher (10) gemäß einem der Ansprüche 8 bis 11, **dadurch gekennzeichnet,**
- **dass** die Kontaktbereiche (30) auf die Wärmeübertragungsfläche (16) des Wärmeübertragers (14) aufgedruckt werden oder als Folienzuschnitte aufgeklebt werden und
- **dass** bei einer Bestimmung des Bedeckungsgrades (34) der Wärmeübertragungsfläche (16) Hotspots (40) und/oder Coldspots (40) des Wärmeübertragers (14) und/oder der Energiespeicherelemente (12) berücksichtigt werden.

13. Verfahren nach Anspruch 12,
**dadurch gekennzeichnet,**
**dass** bei einer Bestimmung des Bedeckungsgrades (34) der Wärmeübertragungsfläche (16) inhomogene Anpressdrücke zwischen dem Wärmeübertrager (14) und den Energiespeicherelementen (12) berücksichtigt werden.

## Claims

1. Heat transfer device for controlling the temperature of energy storage elements (12) and/or a power electronics unit for example of an energy storage unit (10) with a heat transfer surface (16) which is applied to the energy storage unit (10)
**characterised in that**
- the heat transfer surface (16) is partially coated with a layer (29) having a heat-conducting material, and
- the heat transfer surface (16) has contact areas (30) which are provided with the heat-conducting layer (29) and has insulating areas (32) which are not provided with the heat-conducting layer (29),
**characterised in that**
the degree of coverage (34) of the heat-conducting layer (16) varies to compensate at least for a hot spot and/or a cold spot of the heat transfer device (14) and/or the energy storage elements (12).

2. Heat transfer device according to claim 1,
**characterised in that**
the contact areas (30) are arranged to provide a defined thermal contact between the heat transfer device (14) and the energy storage elements (12).

3. Heat transfer device according to any of claims 1 to 2,
**characterised in that**
the contact areas (30) are designed to be flat and round, in particular circular and/or oval, and/or angular, in particular rectangular and/or hexagonal.

4. Heat transfer device according to any of claims 1 to 3,
**characterised in that**
a degree of coverage (34), which indicates the ratio between a surface area of the contact areas (30) and a surface area of the insulating areas (32), varies in sections.

5. Heat transfer device according to claim 4,
**characterised in that**
the degree of coverage (34) of the heat transfer surface (16) varies in a longitudinal direction (17) of the heat transfer device (14) and in a transverse direction (19) of the heat transfer device (14).

6. Heat transfer device according to claim 4 or 5,
**characterised in that**
the degree of coverage (34) of the heat transfer surface (16) is adjusted locally to a desired temperature difference (27) between the heat transfer device (14) and the energy storage elements (12) such that the degree of coverage (34) is smaller the higher the desired temperature difference (27) between the heat transfer device (14) and the energy storage elements (12).

7. Heat transfer device according to any of claims 4 to 6,
**characterised in that**
the heat transfer device (14) has a fluid channel (18) through which a fluid (20) can be directed in order to control the temperature of the energy storage elements (12), and **in that** on an inflow side (24) of the heat transfer device (14) at which the fluid (20) flows into the heat transfer device (14), the degree of coverage (34) is smaller than at an outflow side (28) of the heat transfer device (14) at which fluid (20) flows out of the heat transfer device (14).

8. Energy storage unit with energy storage elements (12) and at least one heat transfer device (14) according to any of claims 1 to 7, which bears on the energy storage elements (12) in order to control the temperature of the energy storage elements (12),
**characterised in that**
a contact surface is formed between the energy storage elements (12) and the heat transfer device (14) by the heat conducting layer (29) applied onto the heat transfer device (14).

9. Energy storage unit according to claim 8,
**characterised in that**
the degree of coverage (34) of the heat exchange surface (16) varies in order to compensate for non-homogeneous contact pressures between the heat transfer device (14) and the energy storage elements (12).

10. Energy storage unit according to claim 8 or 9,
**characterised in that**
the contact areas (30) which are coated with the heat conducting material and the insulating areas (32) which are not coated with the heat conducting material alternate with one another perpendicular to a longitudinal direction (17) of the heat transfer device (14), so that in the insulating areas (32) an air gap is formed between the heat transfer device (14) and the energy storage elements (12).

11. Energy storage unit according to any of claims 8 to 10,
**characterised in that**
the contact areas (14) have structural sizes that are smaller than the structural sizes of the energy storage elements (12).

12. Method for the production of a heat transfer device (14) according to any of claims 1 to 7 for an energy storage unit (10) according to any of claims 8 to 11, **characterised in that**
- the contact areas (30) are printed onto the heat transfer surface (16) of the heat transfer device (14) or are adhered as foil pre-cut parts and
- when determining the degree of coverage (34) of the heat transfer surface (16) hot spots (40) and/or cold spots (40) of the heat transfer device (14) and/or the energy storage elements (12) are taken into consideration.

13. Method according to claim 12,
**characterised in that**
when determining the degree of coverage (34) of the heat transfer surface (16) non-homogeneous contact pressures between the heat transfer device (14) and the energy storage elements (12) are taken into account.

## Revendications

1. Échangeur de chaleur destiné à équilibrer la température d'éléments accumulateurs d'énergie (12) et/ou d'une électronique de puissance par exemple d'un accumulateur d'énergie (10), avec une surface de transfert de chaleur (16) qui est appliquée contre l'accumulateur d'énergie (10),
**caractérisé en ce que**
- la surface de transfert de chaleur (16) est revêtue partiellement d'une couche (29) comportant un matériau thermoconducteur, et
- la surface de transfert de chaleur (16) comporte des zones de contact (30), qui sont munies de la couche thermoconductrice (29), et des zones d'isolation (32), qui ne sont pas munies de la couche thermoconductrice (29),
**caractérisé en ce que**
- le degré de couverture (34) de la surface de transfert de chaleur (16) varie pour compenser au moins un point chaud et/ou un point froid de l'échangeur de chaleur (14) et/ou des éléments accumulateurs d'énergie (12).

2. Échangeur de chaleur selon la revendication 1,
**caractérisé en ce**
**que** les zones de contact (30) sont prévues pour un contact thermique défini entre l'échangeur de chaleur (14) et les éléments accumulateurs d'énergie (12).

3. Échangeur de chaleur selon l'une quelconque des revendications 1 à 2,
**caractérisé en ce**
**que** les zones de contact (30) sont réalisées planes ainsi que rondes, en particuliers circulaires et/ou ovales, et/ou anguleuses, en particulier quadrangulaires et/ou hexagonales.

4. Échangeur de chaleur selon l'une quelconque des revendications 1 à 3, **caractérisé en ce**
**qu'**un degré de couverture (34), qui indique le rapport entre une surface des zones de contact (30) et une surface des zones d'isolation (32), varie par endroits.

5. Échangeur de chaleur selon la revendication 4,
**caractérisé en ce**
**que** le degré de couverture (34) de la surface de transfert de chaleur (16) varie dans une direction longitudinale (17) de l'échangeur de chaleur (14) et dans une direction transversale (19) de l'échangeur de chaleur (14).

6. Échangeur de chaleur selon la revendication 4 ou 5,
**caractérisé en ce**
**que** le degré de couverture (34) de la surface de transfert de chaleur (16) est adapté localement à une différence de température souhaitée (27) entre l'échangeur de chaleur (14) et les éléments accumulateurs d'énergie (12) de telle sorte que, plus une différence de température souhaitée (27) entre l'échangeur de chaleur (14) et les éléments accumulateurs d'énergie (12) est élevée, plus le degré de couverture (34) est petit.

7. Échangeur de chaleur selon l'une quelconque des revendications 4 à 6,
**caractérisé en ce**
**que** l'échangeur de chaleur (14) comporte un canal de fluide (18) par lequel un fluide (20) peut être conduit afin d'équilibrer la température des éléments accumulateurs d'énergie (12) et **en ce que**, au niveau d'un côté d'entrée (24) de l'échangeur de chaleur (14) au niveau duquel le fluide (20) entre dans l'échangeur de chaleur (14), le degré de couverture (34) est plus petit qu'au niveau d'un côté de sortie (28) de l'échangeur de chaleur (14) au niveau duquel le fluide (20) sort de l'échangeur de chaleur (14).

8. Accumulateur d'énergie avec des éléments accumulateurs d'énergie (12) et avec au moins un échangeur de chaleur (14) selon l'une quelconque des revendications 1 à 7 qui s'appuie contre les éléments accumulateurs d'énergie (12) pour équilibrer la température des éléments accumulateurs d'énergie (12),
**caractérisé en ce**
**qu'**une surface de contact entre les éléments accumulateurs d'énergie (12) et l'échangeur de chaleur (14) est formée par la couche thermoconductrice (29) appliquée sur l'échangeur de chaleur (14).

9. Accumulateur d'énergie selon la revendication 8,
**caractérisé en ce**
**que** le degré de couverture (34) de la surface de transfert de chaleur (16) varie pour compenser des pressions d'appui non homogènes entre l'échangeur de chaleur (14) et les éléments accumulateurs d'énergie (12).

10. Accumulateur d'énergie selon la revendication 8 ou 9,
**caractérisé en ce**
**que** les zones de contact (30), qui sont revêtues avec le matériau thermoconducteur, et les zones d'isolation (32), qui ne sont pas revêtues avec le matériau thermoconducteur, alternent transversalement par rapport à une direction longitudinale (17) de l'échangeur de chaleur (14) de telle sorte que, pour les zones d'isolation (32), une fente d'air est formée entre l'échangeur de chaleur (14) et les éléments accumulateurs d'énergie (12).

11. Accumulateur d'énergie selon l'une quelconque des revendications 8 à 10,
**caractérisé en ce**
**que** les zones de contact (14) comportent des dimensions de structure qui sont inférieures aux dimensions de structure des éléments accumulateurs d'énergie (12).

12. Procédé de fabrication d'un échangeur de chaleur (14) selon l'une quelconque des revendications 1 à 7 pour un accumulateur d'énergie (10) selon l'une quelconque des revendications 8 à 11, **caractérisé en ce que**
- on pousse les zones de contact (30) sur la surface de transfert de chaleur (16) de l'échangeur de chaleur (14) ou on les colle sous forme de découpes en feuilles et
- lors d'une détermination du degré de couverture (34) de la surface de transfert de chaleur (16), on prend en compte des points chauds (40) et/ou des points froids (40) de l'échangeur de chaleur (14) et/ou des éléments accumulateurs d'énergie (12).

13. Procédé selon la revendication 12,
**caractérisé en ce**
**que**, lors d'une détermination du degré de couverture (34) de la surface de transfert de chaleur (16), on prend en compte des pressions d'appui non homogènes entre l'échangeur de chaleur (14) et les éléments accumulateurs d'énergie (12).
